# EUROPEAN PATENT APPLICATION

(11) **EP 4 792 916 A1**
(43) Date of publication of application: **19.08.2026**
(21) Application number: 25157618.7
(22) Date of filing: 13.02.2025
(51) Int. Cl.: B01D 53/62, B01D 53/78, B01D 53/34, F23J 11/00

(54) **METHOD OF OPERATING A PROCESS PLANT NETWORK**

(71) Applicant: Linde GmbH, 82049 Pullach (DE)
(72) Inventor: Matthes, Jörg, 82538 Geretsried (DE); Zander, Hans-Jörg, 81479 München (DE); Kamann, Martin, 82041 Oberhaching (DE); Opitz, Martin, 82049 Pullach (DE)
(74) Representative: Meilinger, Claudia Sabine

(57) **Abstract**

A method of operating a process plant network (100) is proposed, the process plant network (100) comprising a plurality of flue gas emitters (1-4), a common carbon dioxide removal arrangement (20), a plurality of individual flue gas venting units (15) or a common flue gas venting unit, a plurality of pressure maintaining valves (13) and a plurality of flue gas flaps (14), wherein each of the flue gas emitters (1-4) is connected to the common carbon dioxide removal arrangement (20) via one of the pressure maintaining valves (13) and in parallel thereto to one of the individual flue gas venting units (15) or to the common flue gas venting unit via one of the flue gas flaps (14), wherein each of the flue gas emitters (1-4) is operated in at least a first operating mode and in a second operating mode and produces a flue gas in the first operating mode and in the second operation mode, wherein the flue gas of any one of the carbon dioxide emitters (1-4) operated in the first operating mode is passed to the common carbon dioxide removal arrangement (20) via said one of the pressure maintaining valves (13) and the flue gas of any one of the carbon dioxide emitters (1-4) operated in the second operating mode is passed to said one of the flue gas venting units (15) or to the common flue gas venting unit via said one of the flue gas flaps (14), wherein a switch from the first operating mode to the second operating mode in each of the plurality of carbon dioxide emitters (1-4) is performed on the basis of a switching signal issued by a control unit. A process plant network (100) for performing the proposed method is also proposed herein.

## Description

### Field

The present disclosure relates to a method of operating a process plant network and to a corresponding process plant network.

### Background

Capturing carbon dioxide from combustion flue gases is known per se. As, e.g., outlined in the article "Carbon Dioxide" in Ullmann's Encyclopedia of Industrial Chemistry, online publication 30 May 2014, DOI: 10.1002/14356007.a05_165.pub2, section 6.2, "Carbon Dioxide from Flue Gases", carbon dioxide is a component of all flue gases produced by the combustion of carbonaceous fuels. For capturing carbon dioxide, flue gases are typically cleaned from particles and passed through a water scrubber and/or a flue gas desulphurisation system before they are subjected to a scrubbing step using, e.g., an alkaline solution or an amine solution in order to absorb carbon dioxide. The present disclosure particularly pertains to amine scrubbers.

Flue gases are produced in process industries for example in furnaces or reactors in which heat at a high temperature level is required. Examples of such furnaces or reactors are reformers, steam crackers or fired process heaters and steam boilers. In large interconnected sites comprising several furnaces or reactors, it may be advantageous to collect flue gas from several flue gas emitters and process a combined flue gas stream, such that individual units can be dispensed of.

However, such arrangements may be susceptible to malfunctions, as described hereinbelow, and therefore improved solutions are desired.

### Summary

Against this background, a method of operating a process plant network and a corresponding process plant network comprising the features of the independent claims are proposed. Embodiments are the subject of the dependent claims and of the description that follows hereinbelow.

The method provided herein is used for operating a process plant network comprising a plurality of flue gas emitters, a common carbon dioxide removal arrangement, a plurality of individual flue gas venting units or a common flue gas venting unit, a plurality of pressure maintaining valves and a plurality of flue gas flaps.

Each of the flue gas emitters is connected to the common carbon dioxide removal arrangement via one of the pressure maintaining valves and in parallel thereto, i.e., in parallel to the connection to the common carbon dioxide removal arrangement via said one of the pressure maintaining valves, to one of the individual flue gas venting units or to the common flue gas venting unit via one of the flue gas flaps.

The term "in parallel thereto" is used herein to express that the arrangement of the pressure maintaining valves and the flue gas flaps is, for each of the flue gas emitters, such that the flue gas is, when passed through the pressure maintaining valves, not passed through the flue gas flaps thereafter and vice versa, i.e., the pressure maintaining valves flue gas flaps are not arranged in series to one another but can be selectively or parallely supplied with the flue gas.

A connection "via" a certain element is to be understood to include at least this element, but further elements, particularly certain ducts as mentioned below may obviously be included in such connections. A "connection" may be opened or closed by a valve,or may be restricted by such a valve.

Each of the carbon dioxide emitters is operated in at least a first operating mode and a second operation mode. In both the first and the second operating mode, the carbon dioxide emitter produces a flue gas. This may also be the case in further operation modes, and other operation modes may be present in which, e.g., the carbon dioxide emitter is inactive and therefore produces no flue gas. The first and second operation modes are performed in time intervals not overlapping each other.

The flue gas produced by any one of the carbon dioxide emitters operated in the first operating mode is passed to the common carbon dioxide removal arrangement via said one of the pressure maintaining valves and this flue gas is particularly treated in the common carbon dioxide removal arrangement in order to recover carbon dioxide therefrom. The flue gas, which is thereby depleted from carbon dioxide, may be subjected to further treatment steps such as flue gas denitrification, and such and further treatment steps may also be performed upstream and/or downstream of the common carbon dioxide removal arrangement. Particularly, the flue gas flaps associated with the carbon dioxide emitters operated in the first operating mode are closed in the first operating mode.

The flue gas produced by any one of the carbon dioxide emitters operated in the second operating mode is instead passed to said one of the flue gas venting units or to the common flue gas venting unit via said one of the flue gas flaps, and it is particularly at least in part vented to the atmosphere. While this flue gas is not subjected to a carbon dioxide removal, it may preferably be subjected to any other flue gas treatment steps to avoid emissions, e.g., using a flue gas denitrification system. Particularly, the pressure maintaining valves associated with the carbon dioxide emitters operated in the second operating mode are closed in the first operating mode.

In the method proposed herein, a switch from the first operating mode to the second operating mode in each of the plurality of carbon dioxide emitters is performed on the basis of a switching signal issued by a control unit.

The switching signal may particularly be issued on the basis of a feedforward control function, on the basis of a trip signal of a component of the process plant network and/or if one or more pressures detected downstream thereof, i.e., downstream of the flue gas emitter and upstream of the respective pressure maintaining valve or flue gas flap, or downstream of the respective pressure maintaining valve, are detected to be above a predefined value and/or below a predefined value. The predefined values may be the same or different for the detected pressures.

The feedforward control function may particularly include manual control, i.e., an action of an operator, particularly during commissioning and start-up and/or shutdown of the individual flue gas emitters. It may also be envisaged that an operator observes parameters such as pressure fluctuations, e.g. visible by pressure indicators, etc. An envisaged start-up scenario could include that the pressure maintaining valve(s) is or are closed due to wind-up of the pressure controller, while the flue gas flap(s) is or are open. Based on a pressure control function, the pressure maintaining valve(s) can be opened once an operator would use manual control to close the flue gas flap(s).

To start the flue gas fan in the flue gas collecting duct, enough flue gas must be available for anti-surge reasons, so both pressure maintaining valve(s) and flue gas flap(s) could be manually opened for a minimum number of emitters. During the acceleration of the flue gas fan, there might be some air ingress to the flue gas system as a reverse flow via the open flue gas flap(s). The operator could then manually switch to closed flue gas flap(s) and in parallel the controller(s) acting on the pressure maintaining valve(s) could be switched to automatic mode.

The trip signal may particularly a trip signal of a flue gas blower as further explained below, wherein the trip signal may particularly indicate that the flue gas blower is no longer able to maintain a defined or required pressure or pressure range in a flue gas collecting duct, which may particularly a slightly sub-atmospheric pressure or pressure range. In corresponding embodiments, therefore, the flue gas emitters may be operated further, by switching from passing flue gas to the flue gas collecting duct to passing the flue gas to the flue gas venting unit(s).

It goes without saying that pressure sensors are used to detect said one or more pressures downstream of the carbon dioxide emitters at any position suitable for a corresponding detection. Switching from the first operating mode to the second operating mode particularly includes opening the corresponding flue gas flap and may include closing the corresponding pressure maintaining valve and vice versa.

Using the proposed method, individual or all carbon dioxide emitters can easily be decoupled from the common carbon dioxide removal arrangement in case of a failure in the carbon dioxide emitters and/or the common carbon dioxide removal arrangement. Particularly, it could be demonstrated that, with the proposed concept, in particular an operational fault of a flue gas blower arranged upstream of the common carbon dioxide removal arrangement and downstream of the pressure maintaining valves does not necessarily lead to a malfunction of the carbon dioxide emitters. Such an operational fault of a flue gas blower leads to an increase of a pressure in the region upstream of the flue gas blower and downstream of the pressure maintaining valves, which may be too high to be overcome by a flue gas pressure provided by the carbon dioxide emitters. Also, it may be advantageous if, in such cases, no further flue gas is passed to the common carbon dioxide removal arrangement. In such situations, the operation modes are switched from the first to the second operating mode and the flue gas is directly released to the atmosphere. This may be a preferred solution as compared to shutting down the complete process plant network, particularly in case of processes of limited process dynamics, such as steamcrackers.

In an embodiment as proposed herein, the process plant network further comprises a plurality of individual flue gas ducts and a flue gas collecting duct, wherein each of the carbon dioxide emitters is connected to one of the individual flue gas ducts and provides the flue in the first operating mode and in the second operating mode to said one of the individual flue gas ducts. The pressure sensors mentioned above already may include pressure sensors arranged in the individual flue gas ducts and the flue gas collecting duct, in particular.

Furthermore, in this embodiment, each of the carbon dioxide emitters is separately connected to one of a plurality of individual flue gas ducts and provides the flue gas produced in the first operating mode and in the second operating mode to said one of the plurality of individual flue gas ducts to which it is connected. Additionally, each of the individual flue gas ducts is connected via said one of the pressure maintaining valves to the flue gas collecting duct, said one of the pressure maintaining valves being used to control a first flue gas pressure in the individual flue gas duct in the first operating mode on the basis of a first pressure set value being defined on the basis of a counterpressure of said one of the individual flue gas venting units or the common flue gas venting unit, which would be present if said one of the flue gas flaps were opened to the individual flue gas venting units or the common flue gas venting unit.

In this embodiment, furthermore, each of the individual flue gas ducts is connected via said one of the flue gas flaps to said one of the individual flue gas venting units or to the common flue gas venting unit, said one of the flue gas flaps being closed in the first operating mode and being opened in the second operation mode.

The flue gas collecting duct is connected to the common carbon dioxide removal unit. A flue gas blower is provided in the flue gas collecting duct or in the common carbon dioxide removal arrangement in this embodiment, said flue gas blower being used to control a second flue gas pressure in the flue gas collecting duct on the basis of a second pressure set value. The second flue gas pressure is particularly a slight underpressure resulting from providing the flue gas to the removal unit.

Said switch from the first operating mode to the second operating mode is particularly performed when the first flue gas pressure and/or the second flue gas pressure exceeds said predefined value, which may particularly be a result of the flue gas blower not being able to adjust the pressure in the flue gas collecting duct, e.g., as a result of a malfunction. More generally, such pressure increases may result if a control unit is no more able to control the first or second flue gas pressure. This means that when a pressure raises above a safe or manageable value, flue gas may be vented to the atmosphere, and negative effects may be avoided.

Pressure controllers associated with the pressure maintenance valve in certain embodiments disclosed herein may thus receive as a set point the pressure that would be necessary to discharge the flue gas via the exhaust stack, i.e. via the individual or common flue gas venting unit, to the environment under the condition that the flue gas flap in the exhaust stack would be open and the pressure maintenance valve would be closed, which corresponds to the pressure that would prevail if no carbon dioxide removal unit were installed. Irrespective of the specific control or regulation strategy, therefore, the atmospheric back pressure and possible further elements generating counter pressures are "simulated" in the method as proposed herein. This control strategy has surprisingly been found advantageous over other control strategies tested by the applicant in simulation studies. It could be demonstrated that with the proposed concept, in particular an operational fault of the flue gas blower does not necessarily lead to a malfunction of the emitters, such as cracking furnaces.

In certain embodiments as proposed herein, the process plant network further comprises a water injection system including a plurality of water injection units, wherein each of the individual flue gas ducts is provided with one of the water injection units, each of the water injection units being operated on the basis of a temperature of the flue gas, particularly in the individual flue gas ducts. Injected process water may be balanced by water used in a downstream direct contact cooler. A particular advantage of such embodiments is that a pressure control may be decoupled from a temperature control almost completely, allowing a more flexible operation.

In certain embodiments as proposed herein, the water injection units, the pressure maintaining valves and/or the flue gas blower are controlled using at least two control units operated using a synthesized control process. Such control units can advantageously be coupled or coordinated in a synthesized control strategy or corresponding controllers, such as cascade controllers. The synthesized control process may include the temperature control strategy or not.

In certain embodiments as proposed herein, as already mentioned above, the common carbon dioxide removal arrangement comprises a direct contact cooler operated with process water, said process water being passed from the direct contact cooler to the water injection units. This allows for a single process water circuit to be realized according to certain embodiments.

In certain embodiments as proposed herein, the carbon dioxide removal arrangement comprises a scrubbing unit. Scrubbing units, particularly using amine scrubbing media or absorbents, are well tested and reliable means of removing carbon dioxide from gaseous streams, particularly flue gas streams.

In certain embodiments as proposed herein, each of the carbon dioxide emitters is independently selected from the group comprising a steam cracking furnace, a reforming furnace, a dehydrogenation unit, a water gas shift unit, a steam boiler, a gas turbine unit and a power generating unit, wherein a power generating unit may be a special form of gas turbine unit. Aspects disclosed herein, therefore, are applicable for a large number of different process units and corresponding networks.

In case of a failure in the temperature control as mentioned above, i.e. quenching of flue gas by process water, which may result in a temperature of the flue gas exceeding a design temperature of the common flue gas duct, the individual flue gas emitters can be also switched to atmosphere instead to the common flue gas duct. That is, in such embodiments, the flue gas flaps are opened when a temperature in the individual flue gas ducts or downstream thereof is, or is predicted to be, above a temperature threshold and are closed below said temperature threshold

In certain embodiments as proposed herein, said adjusting the pressure in the flue gas collecting duct is performed by adjusting a speed and/or a guide grille or inlet guide vane of the flue gas blower. This is a particularly reliable way of pressure regulation.

The process plant network proposed herein comprises a plurality of flue gas emitters, a common carbon dioxide removal arrangement, a plurality of individual flue gas venting units or a common flue gas venting unit, a plurality of pressure maintaining valves and a plurality of flue gas flaps, wherein each of the flue gas emitters is connected to the common carbon dioxide removal arrangement via one of the pressure maintaining valves and in parallel thereto to one of the individual flue gas venting units or to the common flue gas venting unit via one of the flue gas flaps.

Each of the flue gas emitters of the proposed process plant network is configured to be operated in at least a first operating mode and in a second operating mode and to produce a flue gas in the first operating mode and in the second operation mode, wherein each of the flue gas emitters is configured to pass, in the first operation mode, its flue gas to the common carbon dioxide removal arrangement via said one of the pressure maintaining valves and to pass, in the second operation mode, its flue gas to said one of the flue gas venting units or to the common flue gas venting unit via said one of the flue gas flaps. In the proposed process plant network, furthermore, each of the plurality of carbon dioxide emitters is configured to perform a switch from the first operating mode to the second operating mode on the basis of a switching signal issued by a control unit.

As to further details and advantages of such a process plant network, reference is made to the explanations above in regarding the method proposed herein and its different embodiments. Particularly, such a process plant network may, in embodiments as proposed herein, be operated using a method according to any of the embodiments as discussed herein.

### Figures

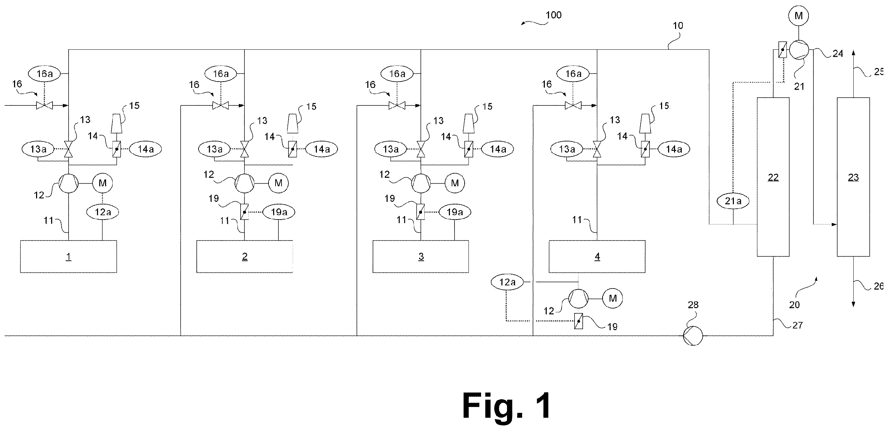

Embodiments as disclosed herein will now be described, by way of example only, with reference to accompanying drawings, in which
Figure 1 illustrates a process plant network according to an embodiment.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to certain embodiments disclosed herein likewise may apply to methods, processes, procedures, etc. according to corresponding embodiments.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate and technically sensible combinations of the disclosed elements, components, features, parts, steps, means, etc., other than those specifically described herein. In addition, this disclosure may include other inventions not presently claimed, but which may be claimed in future, particularly when encompassed by the scope of the independent claims.

The conjunction "and/or" is to be understood, when used in a list before the last element of the list, as meaning that all the terms or elements included in the list can be combined with each other in any way. In other words, "A, B and/or C" means "A and/or B and/or C" or "at least one of the elements A, B, C in any combination". Embodiments as disclosed herein particularly pertain to processes using reactors comprising heated reaction tubes which are arranged in a reaction chamber heated by combusting a fuel (also referred as "furnaces").

Examples of such processes are steam cracking, various reforming processes, in particular steam reforming, dry reforming (carbon dioxide reforming), mixed reforming processes, and processes for the dehydrogenation of alkanes. In steam cracking, the reaction tubes are passed through the reactor in the form of coils, which typically have at least one reverse bend in the reactor, whereas in steam reforming, tubes are typically used which run through the reactor without a reverse bend. Embodiments as disclosed herein may also be used in connection with so-called "millisecond" or single-pass reactors which are characterized by very low dwell times.

Further applications of embodiments proposed herein are reactors for performing a reverse water gas shift reaction of carbon dioxide and hydrogen to form carbon monoxide and water, a dehydrogenation of oxygenates such as a reaction of methanol to formaldehyde and hydrogen, cracking of ammonia to yield nitrogen and hydrogen, dehydrogenation of so-called liquid organic hydrogen carriers as known in the field concerned, and reforming of methanol and glycerol.

Embodiments as proposed herein may be suitable for all such processes and different types of reaction tubes or reactors. Purely by way of illustration, and regarding further details of technical solutions known, reference is made to the articles "Ethylene", "Gas Production" and "Propene" in Ullmann's Encyclopedia of Industrial Chemistry, for example the publications dated April 15, 2009, DOI: 10.1002/14356007.a10_045.pub2, December 15, 2006, DOI: 10.1002/14356007.a12_169.pub2, and June 15, 2000, DOI: 10.1002/14356007.a22_211. The terminology used herein corresponds, unless defined otherwise, to what is customary in the field. Hereinbelow, the term "carbon dioxide emitter" is used for such furnaces and other fired units, such as steam boilers.

In combustion processes involved in the processes indicated above, flue gases are produced whose energy is utilised and which must subsequently be released. According more conventional solutions, the flue gas is released into the atmosphere. However, this is associated with the release of greenhouse gases that are harmful to the climate. This is prevented by collecting and sequestering carbon dioxide from flue gas. As part of the energy transition, carbon dioxide can even be turned into a valuable raw material that can be used to produce climate-neutral hydrocarbons, methanol, dimethyl ether or similar by reducing it with regeneratively produced hydrogen, for example. For this reason, flue gases should be reutilised.

Embodiments as proposed herein include carbon dioxide scrubbing using amine solutions ("amine scrubbing") already mentioned at the outset. Carbon dioxide removal including amine scrubbing typically involves cooling flue gas in a so-called direct contact cooler and then transferred to an amine scrubber by means of a blower ("flue gas blower"). An example of such a process is shown, for example, in an article by J. Husebye et al., "Techno economic evaluation of amine based CO2 capture: impact of CO2 concentration and steam supply", Energy Procedia 23 (2012) 381-390, Figure 1.

In large interconnected sites, it may, as mentioned at the outset already, to collect flue gas from several carbon dioxide emitters and process the common stream further. However, such an arrangement is susceptible to operational faults. The flue gas flows are typically very large and the collection arrangement has typically only a small storage volume, so that system malfunctions quickly lead to the pressure in individual furnaces rising beyond the acceptable level and the furnaces having to be shut down by means of a shutdown device.

If such a case occurs, in which flue gas can no longer be transported via the manifold, the furnaces must be switched immediately to conventional operation with the flue gases being released into the atmosphere. This requires switching operations of large valves, which cannot be switched as quickly as required. For this reason, the manifold and its instrumentation must be designed to be more reliable.

In the processes mentioned above, combustion air is required for firing besides the fuel. For this purpose, a furnace blower may be used to generate a slight negative pressure and ambient air is then drawn in via registers. The furnace blower emits the flue gas containing carbon dioxide into the environment via a chimney ("exhaust stack"). The pressure is regulated by changing the speed of the furnace blower or via adjustable guide grilles on the furnace blower.

To ensure operational safety, the furnace must be switched off if the underpressure is insufficient or if the pressure is too low. Typical pressures used for switching valves or differential pressure switches are at -6 mbar gauge pressure for the pressure switch low low (PSLL) value and 0 mbar gauge for the pressure switch high high (PSHH) value, or in the range from -10 to -15 mbar gauge for PSLL.

The combination of the furnace technology described above with an amine scrubber requires a new control solution, because the back pressure of the furnace blower is no longer the atmospheric pressure, but is controlled by the flue gas blower of the amine scrubber. A further reason is that, in practice, flue gas from several furnaces or other emitters (e.g. steam boilers) is collected in a common flue gas duct, resulting in operation-dependent fluctuations in pressure losses in the flue gas duct and pressure fluctuations at the individual emitter connection points. Furthermore, more rapid fluctuations in the back pressure at the furnace blowers cannot be regulated via the performance control of the furnace blower (via a guide grille or inlet vane or the blower speed). This also applies in particular to malfunction scenarios such as the shutdown of individual emitters or the failure of the amine scrubber. Additionally, the flue gas flow changes significantly as soon as the steam cracker is operated at partial load (i.e. not all furnaces or boilers are in operation). The risk of an inadequate control solution is a reduction in the availability of the entire system due to the malfunction of individual components of the carbon dioxide capture system.

Figure 1 illustrates a process plant network according to an embodiment proposed herein which is designated with reference numeral 100. As mentioned above, Figure 1 likewise illustrates a corresponding method.

Process plant network 100 comprises a plurality of carbon dioxide emitters 1-4 of a type extensively discussed above. The carbon dioxide emitters 1-4 are connected with individual flue gas ducts 11 operated at individual flue gas duct pressures, which may be adjusted in a number of different ways illustrated for carbon dioxide emitters 1-4 of process plant network 100 shown in Figure 1.

For carbon dioxide emitter 1, a furnace blower 12 is provided in the flue gas duct 11, which is operated with a motor M and which provides a slight negative pressure upstream thereof. This pressure is regulated using a pressure regulator 12a. A different way is illustrated for carbon dioxide emitter 2, where likewise a furnace blower 12 is provided in the flue gas duct 11, which is operated with a motor M and which provides a slight negative pressure upstream. However, this pressure is adjusted using a flap 19 in the flue gas duct 11 which is connected with a pressure regulator 19a. This is also the case for carbon dioxide emitter 3. A yet further solution is illustrated for carbon dioxide emitter 4 where a furnace blower 12 is provided upstream thereof, using a flap 19 and a similar control arrangement as explained for carbon dioxide emitter 3.

In all cases, an overpressure may be generated in the flue gas ducts downstream of the furnace blowers 12. This overpressure is maintained at a certain value, herein referred to as a flue gas duct pressure or "first" flue gas pressure, using pressure maintaining valves 13. Each of the individual flue gas ducts 11 is connected via one pressure maintaining valve 13 to a common flue gas collecting duct 10. Pressure maintaining valves 13 are controlled using pressure controllers 13a as discussed.

Furthermore, each of the individual flue gas ducts 11 is connected via a flue gas flap 14 to an individual flue gas venting unit 15 (as shown in Figure 1) or to a common flue gas venting unit in the form of, e.g., a chimney or stack, potentially equipped with further units such as a selective catalytic or non-catalytic reduction unit, filters or the like.

The flue gas collecting duct 10 is connected to a carbon dioxide removal arrangement, which is indicated 20 in its entirety, which includes a flue gas blower 21 and driven by a motor M on the basis of a pressure controller 21a. Flue gas blower 21 is controlled in the manner indicated above by a pressure controller 21a.

The carbon dioxide removal arrangement 20 further comprises a direct contact cooler 22 operated with process water, and a scrubbing unit 23, both units having been described above and/or being generally known in the field. A cooled flue gas stream is indicated with reference numeral 24, and a flue gas stream depleted from carbon dioxide is indicated with reference numeral 25. A carbon dioxide stream 26 may be passed on to further processing and/or sequestration steps.

A stream 27 of process water may be from the direct contact cooler 22 to water injection units 16 associated with the flue gas ducts 11 which are each operated on the basis of a temperature of the flue gases in the individual flue gas ducts 11 using suitable control units 16a in each case.

As proposed herein, flue gas duct pressures in the individual flue gas ducts 11 are controlled by operating the pressure maintaining valves 13, the flue gas duct pressures corresponding to pressures required to release the respective flue gas via the individual or common flue gas venting unit 15 at an opened state of the respective flue gas flap 14 and a closed state of the pressure maintaining valves 13. Furthermore, a pressure in the flue gas collecting duct 10 is adjusted by operating the flue gas blower 21 in the manner as indicated above.

As to further operation characteristics of the process plant network 100, reference is made to the explanations above.

## Claims

1. A method of operating a process plant network (100),
the process plant network (100) comprising a plurality of flue gas emitters (1-4), a common carbon dioxide removal arrangement (20), a plurality of individual flue gas venting units (15) or a common flue gas venting unit, a plurality of pressure maintaining valves (13) and a plurality of flue gas flaps (14),
wherein each of the flue gas emitters (1-4) is connected to the common carbon dioxide removal arrangement (20) via one of the pressure maintaining valves (13) and in parallel thereto to one of the individual flue gas venting units (15) or to the common flue gas venting unit via one of the flue gas flaps (14),
wherein each of the flue gas emitters (1-4) is operated in at least a first operating mode and in a second operating mode and produces a flue gas in the first operating mode and in the second operation mode,
wherein the flue gas of any one of the carbon dioxide emitters (1-4) which is operated in the first operating mode is passed to the common carbon dioxide removal arrangement (20) via said one of the pressure maintaining valves (13) and the flue gas of any one of the carbon dioxide emitters (1-4) which is operated in the second operating mode is passed to said one of the flue gas venting units (15) or to the common flue gas venting unit via said one of the flue gas flaps (14), and
wherein a switch from the first operating mode to the second operating mode in each of the plurality of carbon dioxide emitters (1-4) is performed on the basis of a switching signal issued by a control unit.

2. The method according to claim 1,
wherein the switching signal is issued on the basis of a feedforward control function, on the basis of a trip signal of a component of the process plant network (100) and/or if one or more pressures of the flue gas downstream thereof are detected to be above a predefined value and/or below a predefined value.

3. The method according to claim 1 or 2,
the process plant network (100) further comprising a plurality of individual flue gas ducts (11) and a flue gas collecting duct (10),
wherein each of the carbon dioxide emitters (1-4) is connected to one of the individual flue gas ducts (11) and provides the flue in the first operating mode and in the second operating mode to said one of the individual flue gas ducts (11),
wherein each of the individual flue gas ducts (11) is connected via said one of the pressure maintaining valves (13) to the flue gas collecting duct (10), said one of the pressure maintaining valves (13) being used to control a first flue gas pressure in the individual flue gas duct (11) in the first operating mode on the basis of a first pressure set value being defined on the basis of a counterpressure of said one of the individual flue gas venting units (15) or the common flue gas venting unit,
wherein each of the individual flue gas ducts (11) is connected via said one of the flue gas flaps (14) to said one of the individual flue gas venting units (15) or to the common flue gas venting unit, said one of the flue gas flaps (14) being closed in the first operating mode and being opened in the second operation mode,
wherein a flue gas blower (21) is provided in the flue gas collecting duct (10) or in the common carbon dioxide removal arrangement (20), said flue gas blower (21) being used to control a second flue gas pressure in the flue gas collecting duct (10) on the basis of a second pressure set value.

4. The method according to claim 3,
wherein said switch from the first operating mode to the second operating mode is performed when the first flue gas pressure and/or the second flue gas pressure exceeds said predefined value.

5. The method according to claim 3 or 4,
the process plant network (100) further comprising a water injection system including a plurality of water injection units (16),
wherein each of the individual flue gas ducts (11) is provided with one of the water injection units (16), each of the water injection units (16) being operated on the basis of a temperature of the flue gas.

6. The method according to claim 5,
wherein the water injection units (16), the pressure maintaining valves (13) and/or the flue gas blower (21) are controlled using at least two control units operated using a synthesized control process.

7. The method according to claim 5 or 6,
wherein the common carbon dioxide removal arrangement (20) comprises a direct contact cooler (22) operated with process water, said process water being passed from the direct contact cooler (22) to the water injection units (16).

8. The method according to any one of the preceding claims,
wherein the common carbon dioxide removal arrangement (20) comprises a scrubbing unit (23) operated with a scrubbing liquid.

9. The method according to any one of the preceding claims,
wherein each of the carbon dioxide emitters (1-4) is independently selected from the group comprising a steam cracking furnace, a reforming furnace, a dehydrogenation unit, a water gas shift unit, a steam boiler, a gas turbine unit and a power generating unit.

10. The method according to any one of the preceding claims,
wherein the flue gas flaps (14) are opened when a temperature in the individual flue gas ducts (11) or downstream thereof is, or is predicted to be, above a temperature threshold and are closed below said temperature threshold.

11. The method according to any one of the preceding claims, wherein said adjusting the pressure in the flue gas collecting duct (10) is performed by adjusting a speed and/or a guide grille or inlet vane of the flue gas blower (21).

12. A process plant network (100) comprising a plurality of flue gas emitters (1-4), a common carbon dioxide removal arrangement (20), a plurality of individual flue gas venting units (15) or a common flue gas venting unit, a plurality of pressure maintaining valves (13) and a plurality of flue gas flaps (14),
wherein each of the flue gas emitters (1-4) is connected to the common carbon dioxide removal arrangement (20) via one of the pressure maintaining valves (13) and in parallel thereto to one of the individual flue gas venting units (15) or to the common flue gas venting unit via one of the flue gas flaps (14),
wherein each of the flue gas emitters (1-4) is configured to be operated in at least a first operating mode and in a second operating mode and to produce a flue gas in the first operating mode and in the second operation mode,
wherein each of the flue gas emitters (1-4) is configured to pass, in the first operation mode, its flue gas to the common carbon dioxide removal arrangement (20) via said one of the pressure maintaining valves (13) and to pass, in the second operation mode, its flue gas to said one of the flue gas venting units (15) or to the common flue gas venting unit via said one of the flue gas flaps (14),
wherein each of the plurality of carbon dioxide emitters (1-4) is configured to perform a switch from the first operating mode to the second operating mode on the basis of a switching signal issued by a control unit.

13. The process plant network (100) according to claim 12, configured for performing a method according to any one of claims 1 to 11.
